# EUROPEAN PATENT APPLICATION

(11) **EP 0 887 482 A1**
(43) Date of publication of application: **30.12.1998**
(21) Application number: 98110757.6
(22) Date of filing: 12.06.1998
(51) Int. Cl.: E04B 1/61, F16B 5/00

(54) **Panel comprising means for its quick connection to other panels of the same type**

(30) Priority: 23.06.1997 IT MI971477
(71) Applicant: ARTHA BNS S.r.L., 50059 Vinci, Firenze (IT)
(72) Inventor: Bonistalli, Walter, 51035 Lamporecchio, Pistoia (IT)
(74) Representative: Kratter, Carlo, Dr. Ing.

(57) **Abstract**

A panel, in particular of thermally insulating type, modularly connectable to other panels of the same type to form walls, comprising means for joining together the edges (3) of two panels. These joining means comprise at least one substantially tube-shaped element (4,12) connected in correspondence with at least one portion of a corner (3A) of the panel, the tube-shaped element (4,12) comprising a window (5) extending at least partly within the visible face (F) and within the edge (3) of the panel, and a connection element (10) shaped in such a manner as to be able to be removably inserted into the aperture bounded by two windows (5) of two adjoining panels to join together a portion of the opposing walls (4C,14C) of the two tube-shaped elements (4,12) of the two adjoining panels.

## Description

This invention relates to a panel in accordance with the pre-characterising part of the main claim.

Known panels, in particular those used for thermal insulation, are generally connected together by male-female couplings along their edges, which are suitably shaped for this purpose, and/or by glues of various types. The operations involved in connecting known panels together present numerous drawbacks related on the one hand to the particular shape of the panels and on the other hand to the fact that they require the use of insulating glues or foams, ie of "wet" materials which have to be appropriately prepared and used, and are relatively costly.

In addition, once they have been connected together, known panels are difficult to detach from each other.

An object of the invention is to provide a panel which reduces and simplifies the operations required for connecting the panels together, and which enables the panels to be separated after they have been connected together.

A further object is to provide a panel which involves only "dry" work in connecting the panels together.

A further object is to provide a panel which in the case of thermally insulating panels ensures optimum insulation even along the connection edges.

These and further objects which will be apparent to an expert of the art are attained by a panel in accordance with the characterising part of the accompanying claims.

The invention will be more apparent from the accompanying drawings, which are provided by way of non-limiting example and on which:
Figure 1 is a schematic partial perspective view of two panels connected together and of the connection element;
Figure 2 is a schematic view thereof from above;
Figure 3 is a front schematic view thereof;
Figure 4 is an enlarged partial schematic section therethrough, taken on the line 4/4 of Figure 1;
Figure 5 is a schematic partial perspective view of a modification.

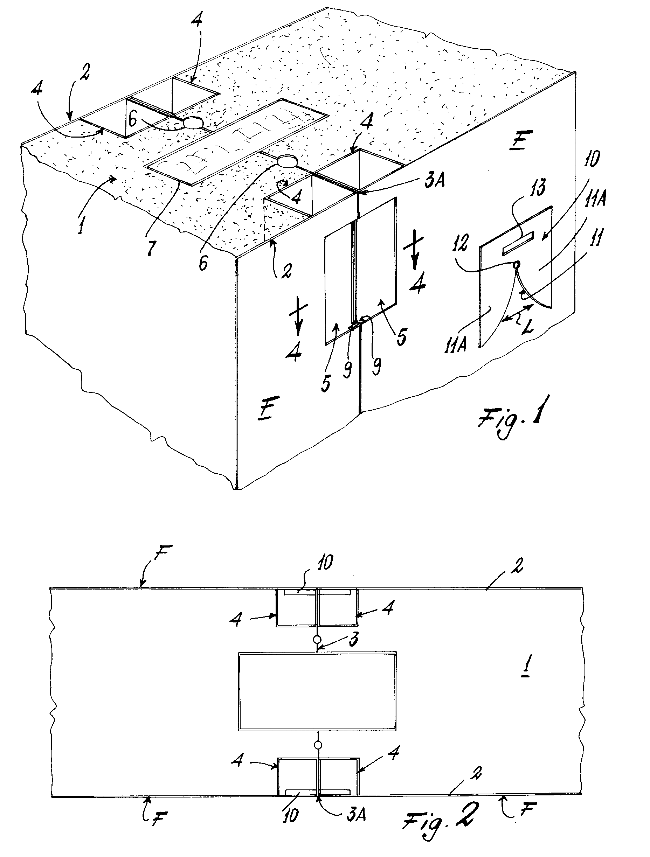

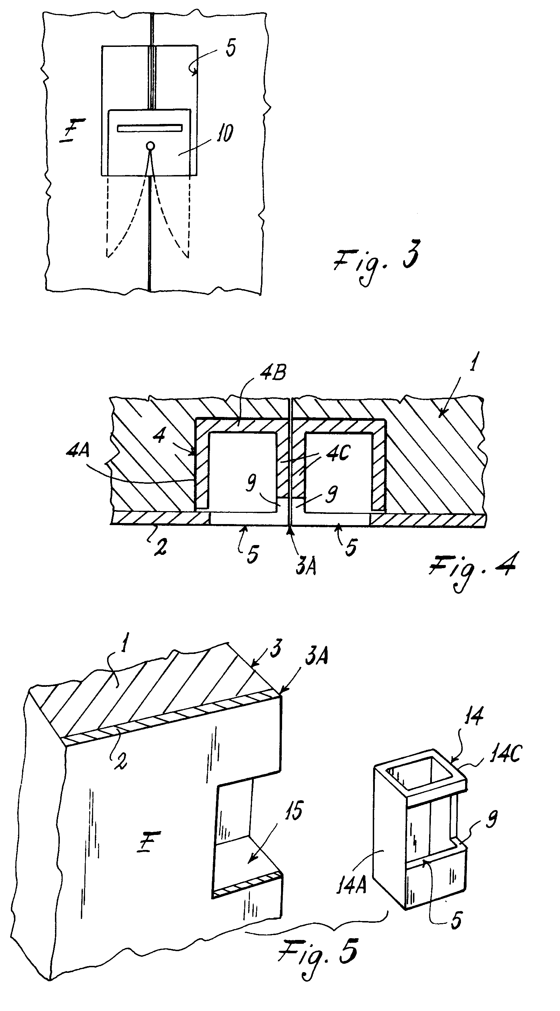

With reference to said figures, a panel according to the invention comprises a layered structure, of which the more inner and thicker layer 1 is constructed for example of a thermally insulating material (for example, the material marketed by DOW Chemicals under the name "STYROFOAM" can be used for this purpose), and the more outer and thinner layers 2 are constructed of a substantially rigid material, for example metal. The three layers are joined together in conventional manner, for example by gluing. At the panel corners 3A, the outer thinner layers 2 are bent to form a tube 4, which in the illustrated example is of square cross-section. The tube 4 has a plurality of spaced-apart apertures or windows 5 extending partly along those faces of the tube coplanar with the major panel faces F and partly along those faces of the tube coplanar with the panel edges 3. The aperture 5 hence comprises a shoulder 9 on which a plate-shaped joint 10 can be mounted. The joint 10 (Figure 1) comprises a central triangular slit 11 bounded by two triangular parts 11A which can be at least partly widened elastically (in the direction of the arrows L) so that the joint 10 can be mounted on the shoulders 9 of the apertures 5 of two side-by-side panels (Figure 3), to hence connect together the opposing walls 4C of the tubes 4 of the two panels. The triangular slit 11 terminates in a circular aperture 12, above which there is provided a further slit 13 for connecting a cover (not shown) for closing the apertures 5 when the joint has been inserted into the apertures.

In correspondence with its corners, the inner layer comprises two curved portions for housing the tube-shaped part 4 and, more centrally, firstly two semicircular recesses 6 and then a recessed part 7 of larger dimensions. When the two panels are brought into contact along their respective edges, the recesses 6 and recesses 7 define circular cavities 6 and rectangular cavities respectively. There can be inserted into the circular cavities conventional expanded-material strip elements of circular cross-section having a diameter greater than the diameter of the cavities, so that when the panels are brought into contact and connected together, these elements are compressed within the cavities to perfectly seal the panels along their edges.

In this manner the use of usual liquid sealants, such as silicone, can be avoided.

A parallelepiped element 8, constructed of the same material as that of the layer 1 or of another known insulating material, can be inserted into the central recess 7. This parallelepiped element 8 is also provided to improve the panel insulation against edge infiltration.

By virtue of the joints 10 and the apertures 5 in the tubes 4 the panels can be quickly connected together. The panels can likewise be quickly separated from each other. Depending on the panel dimensions, one or more apertures are provided along the panel edges.

It should be noted that the aforedescribed embodiment is provided by way of non-limiting example and that numerous modifications can be made thereto, all falling within the same inventive concept.

For example, the panel could comprise more layers than those described or layers constructed of different materials, or the joint 10 could be od different shape, for example of "clothes-peg" shape.

Alternatively, as shown in the modified embodiment of Figure 5 the panel could comprise, in correspondence with its edges, seats 15 for housing tube-shaped elements 14 rigidly secured to the inner layer 1 of the panel, for example by gluing or by screws. As in the preceding case, the element 14 comprises an aperture 5 shaped to enable a joint 10 to be inserted. In this case the cover (not shown) for covering the aperture 5 is shaped such as to mask the entire tube-shaped element 14 and not only the aperture 5. In accordance with this modified embodiment, panels can be formed with outer layers 2 constructed of material which cannot be bent to form a tube, such as wooden layers, or single-layer panels can be provided.

It should be noted that the wall 4A and/or 4B (Figure 4) and 14A (Figure 5) of the tube-shaped elements 4 and 14 could be omitted, these not being essential for connecting the panels together, hence in the present context the terms "tube-shaped element or part" are to be considered as to also include an element of "C" or "U" cross-section, or in the case of Figure 1 also of "L" cross-section.

To further stiffen the walls formed by connecting several panels together, plates are provided comprising, in correspondence with their ends, tubular portions positioned and shaped in such a manner as to penetrate into the cavities bounded by the tube-shaped elements 4. These plates are advantageously inserted both at the upper edge of the wall and at the lower edge. Anchoring feet and/or systems, preferably of adjustable type, can be connected to the plates.

## Claims

1. A panel, in particular of thermally insulating type, modularly connectable to other panels of the same type to form walls, comprising means for joining together the edges (3) of two panels, characterised in that the joining means comprise at least one substantially tube-shaped element (4, 12) connected in correspondence with at least one portion of a corner (3A) of the panel, the tube-shaped element comprising a window (5) extending at least partly within the visible face (F) and within the edge (3) of the panel, and a connection element (10) shaped in such a manner as to be able to be removably inserted into the aperture bounded by two windows of two adjoining panels to join together a portion of the opposing walls (4C, 14C) of the two tube-shaped elements of the two adjoining panels.

2. A panel as claimed in claim 1, characterised by being formed from a plurality of layers (4, 2) rigidly connected together, the tube-shaped element being integral with the most outer layer (2).

3. A panel as claimed in claim 1, characterised by comprising in correspondence with the edges (3A) at least one seat (15) for housing the tube-shaped connection element (14).

4. A panel as claimed in claim 1, characterised by comprising a cover for masking the tube-shaped connection element (4, 14) and the relative aperture (15), the cover being removably connectable to the connection element (10).

5. A panel as claimed in claim 1, characterised by comprising, in correspondence with its edge (3), recessed portions (6, 7) which in cooperation with corresponding recessed portions of an adjoining panel form continuous longitudinal cavities for housing thermal insulation elements.

6. A panel as claimed in claim 1, characterised in that at least one of the insulating elements is constructed of an at least partly compressible material which when at rest has greater dimensions than the relative cavity (6).

7. A panel as claimed in claim 1, characterised by comprising at least one inner layer (1) constructed of a thermally insulating plastic material, and at least one outer layer (2) of much smaller dimensions than the first layer and constructed of a substantially rigid material.

8. A panel as claimed in claim 2, characterised in that the tube-shaped element (4) is continuous, plates being provided for connecting two panels together, said plates being positioned in contact with the upper or lower edges of two adjoining panels and comprising projecting elements arranged to penetrate into the cavities bounded by the tube-shaped elements of the adjoining panels.
